(19) Europäisches Patentamt

European Patent Office

Office européen des brevets

(11) **EP 1 303 142 B1**

(12) **FASCICULE DE BREVET EUROPEEN**

(45) Date de publication et mention
de la délivrance du brevet:
**26.04.2006 Bulletin 2006/17**

(51) Int Cl.:
*H04N 7/30* (2006.01)      *H04N 7/50* (2006.01)
*G06T 9/00* (2006.01)

(21) Numéro de dépôt: **02078817.0**

(22) Date de dépôt: **17.09.2002**

(54) **Circuit de filtrage de données vidéo dans le domaine fréquentiel.**

Filterschaltung für Videodaten im Frequenzbereich

Filtering circuit for video data in the frequency domain

(84) Etats contractants désignés:
**AT BE BG CH CY CZ DE DK EE ES FI FR GB GR
IE IT LI LU MC NL PT SE SK TR**

(30) Priorité: **25.09.2001 FR 0112325**

(43) Date de publication de la demande:
**16.04.2003 Bulletin 2003/16**

(73) Titulaire: **Koninklijke Philips Electronics N.V.
5621 BA Eindhoven (NL)**

(72) Inventeur: **Gobert, Jean,
Société Civile S.P.I.D.
75008,
Paris (FR)**

(74) Mandataire: **van Oudheusden-Perset, Laure E. et
al
Société Civile SPID
156, Boulevard Haussmann
75008 Paris (FR)**

(56) Documents cités:
- PAEK H ET AL: "ON THE POCS-BASED POSTPROCESSING TECHNIQUE TO REDUCE THE BLOCKING ARTIFACTS IN TRANSFORM CODED IMAGES" IEEE TRANSACTIONS ON CIRCUITS AND SYSTEMS FOR VIDEO TECHNOLOGY, IEEE INC. NEW YORK, US, vol. 8, no. 3, 1 juin 1998 (1998-06-01), pages 358-367, XP000767705 ISSN: 1051-8215
- RAO K R ET AL: "Fast Algorithms for DCT-II" 1990 , DISCRETE COSINE TRANSFORM. ALGORITHMS, ADVANTAGES, APPLICATIONS, SAN DIEGO, ACADEMIC, US, PAGE(S) 48-87 XP002231975 * page 49-55, alinéas 4.2-4.3 * * figure 4.4 *
- KOOK YEON KWAK ET AL: "Projection-based eigenvector decomposition for reduction of blocking artifacts of DCT coded image" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. 3, 23 octobre 1995 (1995-10-23), pages 527-530, XP010197022 ISBN: 0-7803-3122-2
- YIP P ET AL: "DIT AND DIF ALGORITHMS FOR DISCRETE SINE AND COSINE TRANSFORMS" PROCEEDINGS OF THE INTERNATIONAL SYMPOSIUM ON CIRCUITS AND SYSTEMS. KYOTO, JUNE 5 - 7, 1985, NEW YORK, IEEE, US, vol. 2 CONF. 18, 1 juin 1985 (1985-06-01), pages 941-944, XP000758005

**Description**

**Domaine technique de l'invention**

La présente invention concerne un circuit de filtrage d'un ensemble de données d'origine apte à mettre en oeuvre en séries les étapes de transformation discrète, de correction de données transformées impaires et de transformation discrète Inverse.

Elle concerne également un procédé de filtrage d'un ensemble de données d'origine comprenant les étapes citées précédemment. Elle concerne enfin un produit programme d'ordinateur' apte à mettre en oeuvre ledit procédé de filtrage de données.

Elle trouve notamment son application dans les décodeurs vidéo et dans les récepteurs de télévision, où la correction d'images numériques précédemment codées puis décodées selon une technique de codage par blocs, la norme MPEG (de l'anglais 'Moving Pictures Expert Group') par exemple, est nécessaire pour atténuer les artefacts visuels causés par ladite technique de codage par blocs.

**Etat de la technique antérieure**

Les algorithmes de compression vidéo utilisant des techniques de codage par blocs conduisent parfois à une dégradation de la qualité des images codées puis décodées. Un des artefacts visuels le plus couramment observé avec ces techniques de codage est appelé artefact de bloc.

L'article H. Paek, E.-C. Kim, S.-U. Lee, "On the POCS-Based Postprocessing Technique to Reduce the Blocking Artifacts in Transform Coded Images", IEEE Transactions on Circuits and Systems for Video Technology, vol. 8, no. 3, June 1998, pages 358-367, décrit un circuit de filtrage d'un ensemble de données d'image comprenant

un premier étage de traitement correspondant à une première sous-étape d'une transformation discrète et apte à traiter les données d'origine et à délivrer des données transformées intermédiaires impaires, et un premier ensemble d'étages de traitement correspondant à un ensemble de sous-étapes de la transformation discrète, apte à traiter les données transformées intermédiaires impaires et à délivrer des données transformées impaires; une unité de correction apte à traiter les données transformées impaires et à délivrer des données transformées corrigées impaires; et

un second ensemble d'étages de traitement correspondant à un ensemble de sous-étapes d'une transformation discrète inverse, apte à traiter les données transformées corrigées impaires et à délivrer des données filtrées intermédiaires, et un dernier étage de traitement correspondant à une dernière sous-étape de la transformation discrète inverse et apte à traiter les données filtrées intermédiaires.

L'article K. Y. Kwak, R. A. Haddad, "Projection-Based Eigenvector Decomposition for Reduction of Blocking Artifacts of DCT Coded Image", Proceedings of the International Conference on Image Processing. (ICIP), Washington, Octobre 23 - 26, 1995, Los Alamitos, IEEE Comp. Soc. Press, USA, vol. 3, pages 527-530, décrit un circuit de filtrage d'un ensemble de données d'image, où les paires des transformations cosinus discrètes directes et inverses consécutives dans le circuit d'itération sont supprimées.

L'article intitulé "A projection-based post-processing technique to reduce blocking artifacts using a priori information on DCT coefficients of adjacent blocks", et publié par Hoon Paek et Sang-Uk Lee, dans "Proceedings of 3rd IEEE International Conference on Image Processing, vol 2, Lausanne, Switzerland, 16-19 Sept 1996, p 53-56" décrit une méthode de filtrage de données contenues dans une image numérique. Cette méthode de filtrage de données a pour but de corriger, dans le domaine fréquentiel, les coefficients qui correspondent à ces artefacts de blocs.

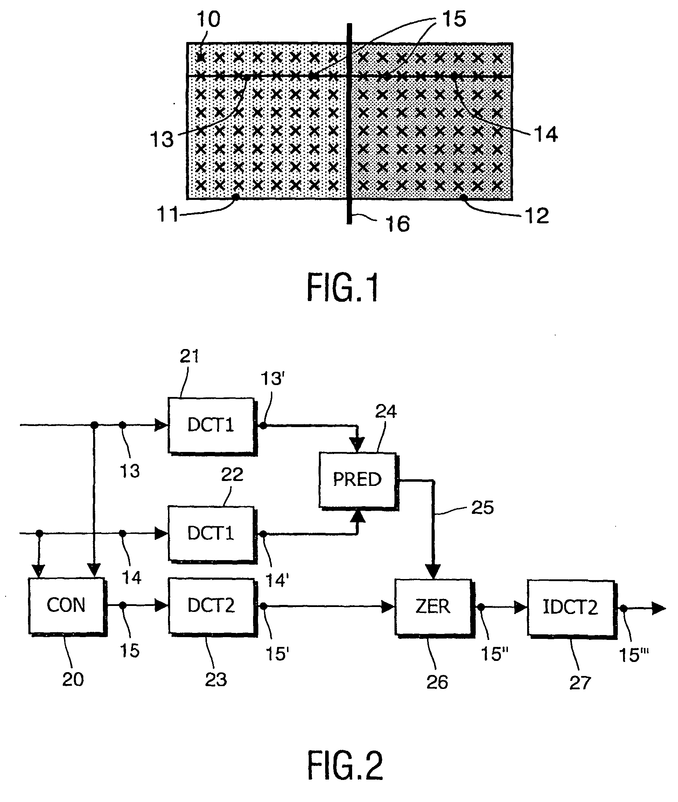

Elle est basée sur le principe suivant. Soient deux segments adjacents u (13) et v (14), tels qu'illustrés à la Fig. 1, appartenant respectivement à deux blocs (11,12) de pixels (10), et disposés de part et d'autre d'une frontière de blocs (16). Si un artefact de blocs est présent entre les segments u et v, le segment w (15) correspondant à la concaténation des premier et second segments inclut des hautes fréquences spatiales qui vont au-delà de celles des segments u et v.

Afin de trouver et de supprimer les fréquences associées aux artefacts de blocs, la méthode de filtrage de données de l'état de la technique antérieure, illustrée à la Fig. 2, comprend les étapes suivantes de :

- calcul d'une première transformation DCT1 (21) en cosinus discrète du segment u de N pixels avec N = 8 dans l'exemple suivant : U = DCT[u] = {U(0), U(1), ..., U(N-1)}, avec

$$U(k) = \alpha(k)\sum_{n=0}^{N-1}u(n)\cos\left(\frac{\pi(2n+1)k}{2N}\right)$$

où k est la fréquence de la donnée transformée U, k ∈ [0,N-1] ;

- calcul d'une seconde transformation DCT1 (22) en cosinus discrète du segment v de N pixels, adjacent au segment u : V=DCT(v)={V(0), V(1), ..., V(N-1)}, soit

$$V(k) = \alpha(k)\sum_{n=0}^{N-1}v(n)\cos\left(\frac{\pi(2n+1)k}{2N}\right) ;$$

- calcul d'une transformation DCT2 (23) en cosinus discrète globale du segment w de 2N soit 16 pixels correspondant à la concaténation CON (20) des segments u et v :W=DCT(w)={W(0), W(1), ..., W(2N-1)}, soit

$$W(k) = \frac{1}{\sqrt{2}} \alpha(k) \sum_{n=0}^{2N-1} w(n) \cos\left( \frac{\pi(2n+1)k}{4N} \right) ;$$

- calcul PRED (24) d'une fréquence maximale prédite kwpred (25) en fonction des fréquences maximales kumax et kvmax de U (13') et V (14'), comme suit :

$$kwpred = 2.\max( \, kumax, \, kvmax \, ) + 2$$

avec
kumax = max( $k \in \{0,...,N-1\}$ / U(k)≠ 0),
kvmax = max( $ke\{0,...,N-1\}$ / V(k) ≠ 0), et
max est la fonction qui donne le maximum de k parmi un ensemble de valeurs déterminées ;
- correction ZER (26) par mise à zéro des données transformées impaires W (15') issues de la transformation discrète globale dont la fréquence est supérieure à la fréquence maximale prédite, fournissant des données corrigées (15").
- calcul d'une transformation en cosinus discrète inverse IDCT2 (27) des données corrigées, fournissant des données filtrées (15''') qui sont ensuite destinées à être affichées à l'écran.

**Exposé de l'invention**

La présente invention a pour but de proposer un circuit de filtrage de données permettant de mettre en oeuvre simplement la méthode de filtrage de données de l'état de la technique antérieure.

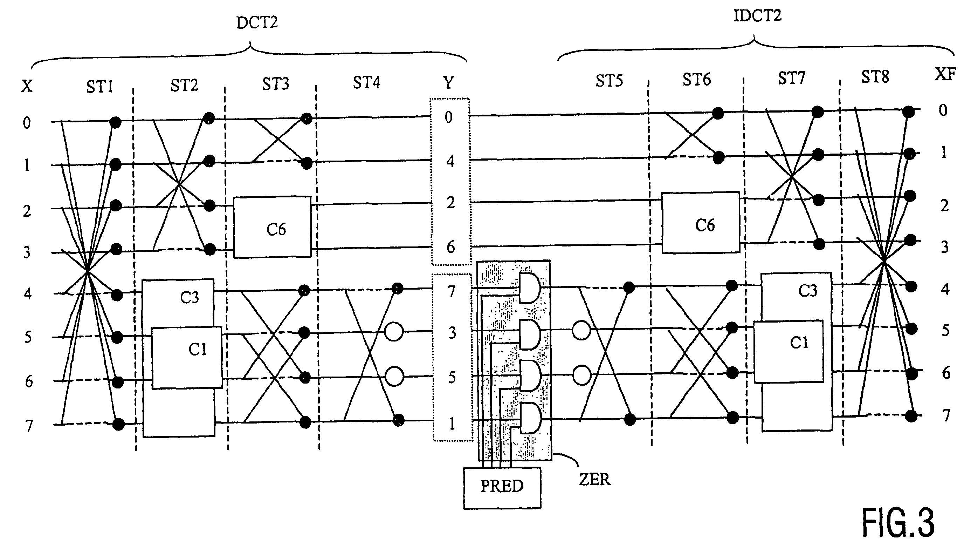

En effet, la mise en oeuvre d'une telle méthode peut s'avérer complexe en nombre d'opérations, notamment en ce qui concerne la séquence comprenant la transformation en cosinus discrète globale, suivie de la correction des données transformées impaires et de la transformation en cosinus discrète inverse. La Fig. 3 illustre ce que serait une implémentation conventionnelle d'une telle séquence dans le cas où 2N = 8. Les transformations en cosinus discrète directe (DCT2) et inverse (IDCT2) traitent les 2N données concaténées X0 à X7 en utilisant l'algorithme de Lee. Les points noirs représentent des additions ou des soustractions, une ligne horizontale en pointillés précédant un point noir correspondant à une donnée à soustraire. Les points blancs correspondent à des multiplications. Les multiplications et les divisions par une puissance de 2 n'ont pas été représentées sur le schéma de la Fig. 3 car elles ont peu d'influence sur la complexité de l'implémentation.

L'implémentation de la transformation en cosinus discrète globale (DCT2) comprend 4 étages successifs séparés sur la Fig. 3 par des lignes verticales en pointillés, à savoir :

- un premier étage (ST1) comportant 8 additionneurs (effectuant des additions ou des soustractions) des données concaténées,
- un deuxième étage (ST2) comportant 4 additionneurs et de 2 unités de rotation (C1,C3) de données, un unité de rotation comprenant 3 additionneurs et 3 multiplieurs selon un principe connu de l'homme du métier,
- un troisième étage (ST3) comportant 6 additionneurs et une unité de rotation (C6), et
- un quatrième étage (ST4) comportant 2 additionneurs et 2 multiplieurs, et fournissant les données transformées impaires Y1, Y3, Y5 et Y7, les données transformés paires Y0, Y2, Y4 et Y6 résultant des données traitées par le troisième étage et non traitées dans le quatrième étage.

L'implémentation de la correction (ZER) par mise à zéro des données transformées impaires issues de la transformation discrète globale dont la fréquence est supérieure à la fréquence maximale prédite, est réalisée avec 4 circuits logiques réalisant la fonction 'ET' entre les données transformées impaires et des sorties d'un circuit de calcul (PRED) d'une fréquence maximale prédite.

L implémentation de la transformation en cosinus discrète inverse (IDCT2) comprend 4 étages successifs :

- un cinquième étage (ST5) comportant 2 additionneurs et 2 multiplieurs aptes à traiter les données transformées impaires corrigées,
- un sixième étage (ST6) comportant 6 additionneurs et une unité rotation (C6),
- un septième étage (ST7) comportant 4 additionneurs et de 2 unités de rotation (C1,C3), et
- un huitième et dernier étage (ST8) comportant 8 additionneurs, et fournissant les données filtrées (XF0 à XF7).

Le circuit de filtrage de données résultant de cette implémentation conventionnelle conduirait donc à une solution complexe comprenant une DCT et une IDCT pour chaque point d'une frontière de bloc. Cette solution présenterait en outre l'inconvénient d'être à la fois coûteuse et fortement consommatrice de puissance.

Afin de remédier à cet inconvénient, le circuit de filtrage de données selon un mode de réalisation préféré de l'invention est remarquable en ce qu'il comprend :

- un premier étage de traitement correspondant à une première sous-étape d'une transformation discrète et apte à traiter les données d'origine et à délivrer des données transformées intermédiaires Impaires, et un premier ensemble d'étages de traitement correspondant à un ensemble de sous-étapes de la transformation discrète, apte à traiter les données transformées intermédiaires impaires et à délivrer des données transformées impaires,

- une unité de correction apte à annuler les données transformées Impaires autres que celles devant être mises à zéro, et à délivrer des données transformées corrigées impaires, et

- un second ensemble d'étages de traitement correspondant à un ensemble de sous-étapes d'une transformation discrète inverse apte à traiter les données transformées corrigées impaires et à délivrer des données filtrées intermédiaires, et un dernier étage de traitement correspondant à une dernière sous-étape de la transformation discrète inverse et apte à traiter les données d'origine et les données filtrées intermédiaires.

Avec de tels circuits de filtrage de données, le nombre de multiplieurs et d'additionneurs est réduit, puisqu'au moins 28 opérations de multiplication ou d'addition sont supprimées selon le mode de réalisation préféré, et au moins 24 opérations selon le mode de réalisation avantageux. L'implémentation de la séquence de traitement de données comprenant en séries la transformation discrète, la correction des données transformées impaires et la transformation discrète inverse se trouve ainsi simplifiée, résultant en un circuit de filtrage à la fois moins coûteux et à plus faible consommation.

**Brève description des dessins**

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :

- la Fig. 1 illustre deux segments adjacents disposés de part et d'autre d'une frontière de blocs,
- la Fig. 2 représente la méthode de traitement de données de l'état de la technique antérieure,
- la Fig. 3 Illustre un circuit mettant en oeuvre de façon conventionnelle la méthode de traitement de données de l'état de la technique antérieure,
- la Fig. 4 représente un mode de réalisation préféré du circuit de filtrage de données selon l'invention,
- la Fig. 5 représente une première variante du mode de réalisation préféré du circuit de filtrage de données selon l'invention,
- la Fig. 6 représente une seconde variante du mode de réalisation préféré du circuit de filtrage de données selon l'invention,

**Exposé détaillé d'au moins un mode de réalisation**

de l'invention

La présente invention concerne un circuit de filtrage de données pour corriger les artéfacts de blocs dans le domaine fréquentiel. Elle est valable pour tout circuit apte à mettre en oeuvre en séries les étapes de transformation discrète de données d'origine, de correction de données transformées impaires et de transformation discrète inverse.

Dans la description qui suit, la transformation discrète est une transformation en cosinus discrète. La présente invention prend en considération le fait que les chemins de calcul direct et Inverse de la transformation en cosinus discrète DCT et de la transformation en cosinus discrète Inverse IDCT sont identiques et traversés dans des directions opposées. Ainsi, si le traitement d'une donnée n'est pas affecté par la correction, les étages de traitement des transformations en cosinus discrète directe DCT et inverse IDCT correspondant à cette donnée peuvent être supprimés dans une certaine mesure.

De plus, la présente invention tire notamment profit du fait que, pour un nombre de données à traiter égal à une puissance de 2, les chemins de données des données transformées paires et impaires sont complètement dissociés, comme le montre la Fig. 3, à l'exception d'un premier étage de traitement (ST1) de la transformation en cosinus discrète DCT et d'un dernier étage de traitement (ST8) de la transformation en cosinus discrète inverse IDCT. La correction affectant uniquement les données transformées impaires, les étages de traitement situés entre la premier et la dernier étage et traitant les données paires peuvent être supprimés.

Il apparaîtra ainsi à l'homme du métier que la présente invention s'applique à toute transformation discrète linéaire présentant les caractéristiques énoncées ci-dessus.

Dans le mode de réalisation préféré, le circuit de filtrage de données tire profit de la linéarité des transformations en cosinus discrète directe DCT et inverse IDCT. Pour cela, les données d'origine X (X0 à X7), correspondant à des valeurs de luminance de 8 pixels dans notre exemple, doivent subir une transformation en cosinus discrète, résultant en des données transformées Y, soit :

$$Y = DCT(X)$$

Les données transformées Y peuvent être divisées en 2 sous-ensembles :

- un premier sous-ensemble YZ correspondant aux fréquences pour lesquelles les données transformées doivent être mises à zéro ;
- un second sous-ensemble YNZ correspondant aux fréquences pour lesquelles les données transformées ne doivent pas être mises à zéro.

Les données transformées Y correspondent ainsi à la concaténation de ces deux sous-ensembles, soit :

$$Y = YZ \mid YNZ.$$

Les données filtrées XF sont obtenues en appliquant une transformation en cosinus discrète inverse sur les données transformées corrigées qui sont soit égales à YNZ, soit égales à 0, autrement dit :

$$XF = IDCT(YNZ \mid 0).$$

En utilisant la linéarité de la transformation en cosinus discrète inverse, on obtient :

$$XF = IDCT(YNZ \mid YZ) - IDCT(0 \mid YZ),$$

soit encore XF = X - IDCT(0 | YZ).
En appelant DX les données différentielles qui correspondent à la différence entre les données d'origine X et les données filtrées XF, on a alors :

$$DX = IDCT(0 \mid YZ) \text{ et } XF = X - DX.$$

Le circuit de filtrage de données selon l'invention doit donc réaliser le schéma suivant :

- réaliser une transformation en cosinus discrète DCT,
- corriger les données transformées en mettant à zéro les données transformées YNZ et en conservant les données transformées YZ,
- réaliser une transformation en cosinus discrète inverse IDCT des données corrigées (0 | YZ), fournissant les données différentielles DX, et
- soustraire les données différentielles DX aux données d'origine X, résultant ainsi en des données filtrées XF.

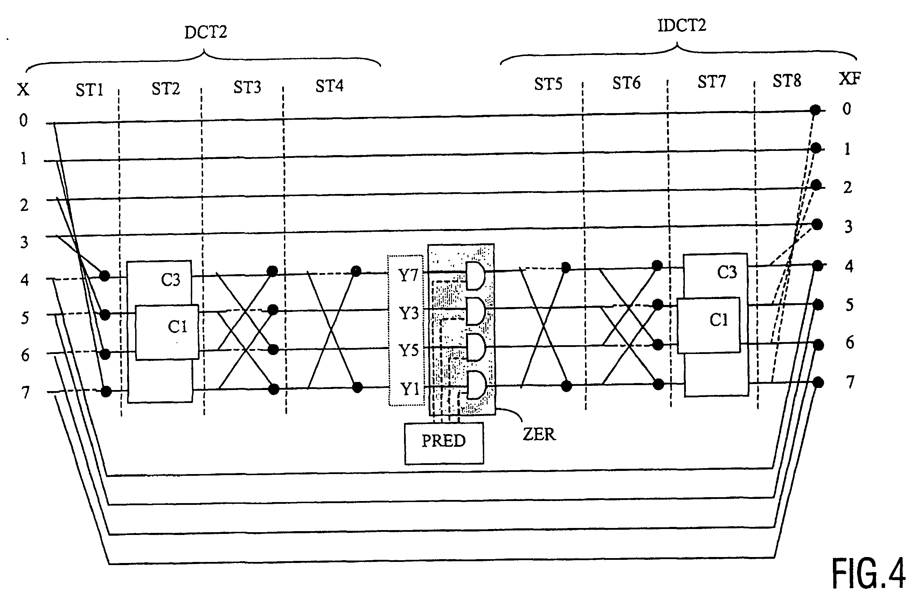

On obtient ainsi un circuit qui fonctionne en mode différentiel et dont une implémentation particulièrement économique est illustrée à la Fig. 4. Le circuit de filtrage de données selon ce mode de fonctionnement comprend 4 étages correspondant à la transformation en cosinus discrète (DCT2) :

- un premier étage (ST1) comporte 4 additionneurs effectuant, pour les lignes 4 à 7, chacun une soustraction d'une donnée d'origine X(j) de ligne j à une donnée d'origine X(7-j) de ligne (7-j), et délivrant des données transformées intermédiaires impaires ;

- un deuxième étage (ST2) comporte 2 unités de rotation (C1,C3) effectuant le traitement des données transformées intermédiaires impaires correspondant respectivement, d'une part aux lignes 5 et 6, et d'autre part aux lignes 4 et 7 ;
- un troisième étage (ST3) comporte 4 additionneurs effectuant dans l'ordre des lignes 4 à 7 :

  - une addition des données issues des lignes 4 et 6 du deuxième étage,
  - une soustraction de la donnée issue de la ligne 5 du deuxième étage à celle de la ligne 7, fournissant une donnée transformée impaire Y3,
  - une soustraction de la donnée issue de la ligne 6 du deuxième étage à celle de la ligne 4, fournissant une donnée transformée impaire Y5,
  - une addition des données issues des lignes 5 et 7 du deuxième étage ;

- un quatrième étage (ST4) comportant 2 additionneurs effectuant :

  - pour la ligne 4, une soustraction de la donnée issue de la ligne 4 du troisième étage à celle issue de la ligne 7, fournissant une donnée transformée impaire Y7,
  - pour la ligne 7, une addition des données issues des lignes 4 et 7 du troisième étage, fournissant une donnée transformée impaire Y1.

Une unité de correction (ZER) des données transformées impaires est réalisée avec 4 circuits logiques réalisant la fonction 'ET'. Les entrées des circuits logiques 'ET' sont d'une part Y1, Y3, Y5 et Y7, et d'autre part une valeur de sortie opposée à la valeur fournie par un circuit de calcul PRED d'une fréquence maximale prédite. Cette valeur de sortie est 1 si la donnée transformée impaire YZ est de fréquence supérieure à la fréquence maximale prédite et 0 dans le cas contraire YNZ. Les données transformées corrigées impaires issues des 'ET' logiques sont donc soit des données transformées impaires YZ devant être mises à zéro, soit 0. Autrement dit, l'unité de correction (ZER) annule les données transformées impaires YNZ autres que celles YZ devant être mises à zéro.

Ainsi, les h données impaires, avec h compris ici entre 0 et 4, dont la fréquence est supérieure à la fréquence maximale prédite ne sont pas corrigées tandis que les autres données impaires sont mises à zéro afin d'être traitée par la transformation discrète inverse (IDCT2) de manière à générer les données différentielles DX.

Le circuit de filtrage de données selon ce mode de réalisation comprend enfin 4 étages correspondant à la transformation en cosinus discrète inverse (IDCT2) :

- un cinquième étage (ST5) comportant 2 additionneurs effectuant sur les données transformées impaires corrigées :

- pour la ligne 4, une soustraction de la donnée issue de la ligne 4 de l'unité de correction à celle issue de la ligne 7,
- pour la ligne 7, une addition des données issues des lignes 4 et 7 de l'unité de correction ;

- un sixième étage (ST6) comportant 4 additionneurs effectuant dans l'ordre des lignes 4 à 7 :

  - une addition des données issues des lignes 4 et 6 du cinquième étage,
  - une soustraction de la donnée issue de la ligne 5 du cinquième étage à celle issue de la ligne 7,
  - une soustraction de la donnée issue de la ligne 6 du cinquième étage à celle issue de la ligne 4,
  - une addition des données issues des lignes 5 et 7 du cinquième étage ;

- un septième étage (ST7) comportant 2 unités de rotation (C1,C3) effectuant le traitement des données issues du premier étage correspondant respectivement, d'une part aux lignes 5 et 6, et d'autre part aux lignes 4 et 7, et délivrant des données filtrées intermédiaires ;
- un huitième et dernier étage (ST8) comportant 8 additionneurs effectuant chacun :

  - pour les lignes j=0 à 3, une soustraction d'une donnée filtrée intermédiaire de ligne (7-j) à la donnée d'origine X(j) de ligne j,
  - pour les lignes j=4 à 7, une addition d'une donnée filtrée intermédiaire de ligne j et de la donnée d'origine X(j) de même ligne.

Le dernier étage agit alors comme un étage différentiel, apte à soustraire les données filtrées intermédiaires issues du septième étage à une première moitié des données d'origine (X0-X3) et à ajouter lesdites données filtrées intermédiaires à une seconde moitié des données d'origine (X4-X7).

De plus, grâce à la linéarité des transformations en cosinus discrète directe et Inverse, les multiplications effectuées par les quatrième et cinquième étages de la Fig. 3 ont également été supprimées car elles n'affectent pas le résultat final.

Dans le cas du mode de réalisation de la Fig. 4, le nombre d'opérations est égal à 48, c'est à dire 36 additions et 12 multiplications, soit 32 opérations de moins que le mode de réalisation conventionnel de la Fig. 3.

Le circuit peut être simplifié dans certains cas particuliers. Par exemple, lorsqu'une minorité de données transformées impaires doit être mise à zéro, Il est possible de remplacer avantageusement le chemin de traitement de la seconde moitié de données (X4-X7 vers XF4-XF7) de la Fig. 4 par un chemin de traitement plus simple.

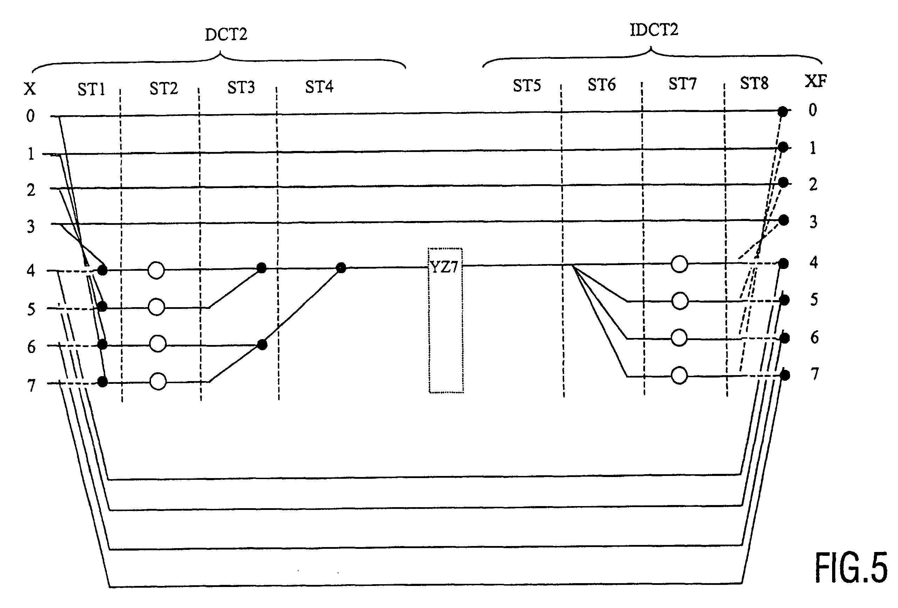

La Fig. 5 représente une simplification du circuit de la Fig. 4 quand seule une donnée transformée impaire YZ7 correspondant à la fréquence maximale, k=7 dans notre cas, doit être mise à zéro.

Le premier étage (ST1) et le dernier étage restent Inchangés par rapport au circuit de la Fig. 4. En revanche, le deuxième étage (ST2) du circuit de filtrage de données selon ce mode de réalisation comporte maintenant 4 multiplieurs, chaque donnée transformée intermédiaire Impaire étant multipliée par un coefficient multiplicatif. Le troisième étage (ST3) comporte 2 additionneurs effectuant respectivement la somme, d'une part des données issues des lignes 4 et 5 du deuxième étage, et d'autre part des données issues des lignes 6 et 7 du deuxième étage. Le quatrième étage (ST4) effectue l'addition des résultats de ces deux additionneurs, formant ainsi la donnée transformée impaire YZ7. Le cinquième étage (ST5) ne fait rien. Le sixième (ST6) étage duplique la donnée transformée Impaire YZ7 pour les lignes 4 à 7 et le septième étage (ST7) multiplie chaque donnée dupliquée par un coefficient multiplicatif.

Dans le cas du mode de réalisation de la Fig. 5, le nombre d'opérations n'est plus que de 25, c'est à dire 17 additions et 8 multiplications.

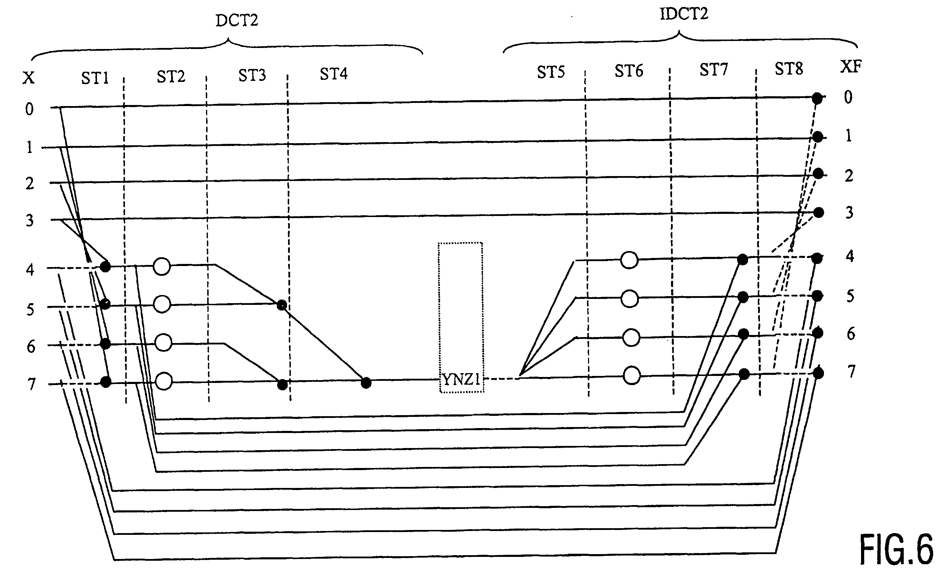

Dans un autre exemple, une majorité de données transformées impaires doit être mise à zéro. La Fig. 6 représente une simplification du circuit de la Fig. 4 quand seule la donnée transformée impaire YNZ1 correspondant à la fréquence impaire minimale k=1 ne doit pas être mise à zéro.

Le premier étage (ST1) reste inchangé par rapport au circuit de la Fig. 4. Le deuxième étage (ST2) du circuit de filtrage de données selon ce mode de réalisation comporte désormais 4 multiplieurs, chaque donnée transformée intermédiaire impaire étant multipliée par un coefficient multiplicatif. Le troisième étage (ST3) comporte 2 additionneurs effectuant respectivement la somme, d'une part des données issues des lignes 4 et 5 du deuxième étage, et d'autre part des données issues des lignes 6 et 7 du deuxième étage. Le quatrième étage (ST4) réalise l'addition des résultats de ces deux additionneurs, formant ainsi la donnée transformée impaire YNZ1. Le cinquième étage (ST5) duplique l'opposé de la donnée transformée YNZ1 pour les lignes 4 à 7. Le sixième étage (ST6) multiplie chaque donnée dupliquée par un coefficient multiplicatif. Le septième étage (ST7) comporte 4 additionneurs effectuant chacun une somme d'une donnée multipliée et d'une donnée transformée intermédiaire impaire de même ligne. Le huitième et dernier étage (ST8) comporte 8 additionneurs, 4 additionneurs effectuant les mêmes soustractions qu'à la Fig. 4 pour les lignes 0 à 3, et 4 additionneurs effectuant chacun une soustraction d'une donnée filtrée intermédiaire de ligne j à une donnée d'origine X(j) de même ligne pour les lignes 4 à 7.

Dans le cas du mode de réalisation de la Fig. 6, le nombre d'opérations est égal à 29, c'est à dire 21 additions et 8 multiplications.

Les circuits tels que ceux décrits aux Fig. 4 5, 6 peuvent être mis en oeuvre dans un dispositif de filtrage de données, un circuit de contrôle permettant de sélectionner le circuit adapté parmi cet ensemble de circuits en fonction du nombre h de données transformées impaires devant être mises à zéro.

Le circuit de filtrage selon l'invention peut être intégré soit comme unité de sortie d'un décodeur vidéo, soit comme unité d'entrée d'un récepteur de télévision, afin de traiter des données numériques décodées.

La présente invention a été réalisée dans le cadre de l'implémentation du procédé de filtrage de données de l'état de la technique antérieure. Les simplifications apportées à l'architecture de filtrage permettent également d'améliorer ledit procédé de filtrage de données.

La présente invention concerne donc un procédé de filtrage d'un ensemble de données d'origine (X0-X7) comprenant en séries les étapes de :

- transformation discrète (DCT2) comportant une première sous-étape (ST1) apte à traiter les données d'origine et à délivrer des données transformées intermédiaires impaires, et un ensemble de sous-étapes (ST2 à ST4) apte à traiter les données transformées intermédiaires impaires et à délivrer des données transformées impaires,
- correction (ZER) apte à traiter les données transformées impaires, et à délivrer des données transformées corrigées impaires en annulant les données transformées impaires autres que celles devant être mises à zéro, et
- transformation discrète inverse (IDCT2) comportant un ensemble de sous-étapes (ST5 à ST7) apte à traiter les données transformées corrigées impaires et à délivrer des données filtrées intermédiaires, et une dernière sous-étape (ST8) apte à traiter les données d'origine (X0-X7) et les données filtrées intermédiaires.

La diminution du nombre des opérations effectuées par chacun des procédés de filtrage permet d'économiser les ressources de calcul ou d'accélérer le temps de traitement des données d'origine.

Il existe de nombreuses manières pour implémenter les étapes précédemment décrites au moyen de logiciel. Il est possible d'implémenter ces étapes au moyen d'un circuit de décodeur vidéo ou d'un circuit de récepteur de télévision, ledit circuit étant convenablement programmé. Un jeu d'instructions contenu dans une mémoire de programmation peut provoquer le circuit à effectuer les différentes étapes précédemment décrites. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau internet. Dans ce cas, un fournisseur de service mettra le jeu d'instructions à la disposition des intéressés.

Aucun signe de référence entre parenthèses dans le présent texte ne doit être interprété de façon limitative. Le verbe "comprendre" et ses conjugaisons n'exclut pas la présence d'autres éléments ou étapes que ceux listés dans une phrase. Le mot "un" ou "une" précédant un élément ou une étape n'exclut pas la présence d'une pluralité de ces éléments ou de ces étapes.

**Revendications**

1. Circuit de filtrage d'un ensemble de données d'origine (X0-X7) comprenant :

   - un premier étage (ST1) de traitement correspondant à une première sous-étape d'une transformation discrète (DCT2) et apte à traiter les données d'origine et à délivrer des données transformées intermédiaires impaires, et un premier ensemble d'étages de traitement (ST2 à ST4) correspondant à un ensemble de sous-étapes de la transformation discrète, apte à traiter les données transformées intermédiaires impaires et à délivrer des données transformées impaires,
   - une unité de correction (ZER) apte à annuler les données transformées impaires autres que celles devant être mises à zéro, et à délivrer des données transformées corrigées impaires, et
   - un second ensemble d'étages de traitement (ST5 à ST7) correspondant à un ensemble de sous-étapes d'une transformation discrète inverse (IDCT2), apte à traiter les données transformées corrigées impaires et à délivrer des données filtrées intermédiaires, et un dernier étage de traitement (ST8) correspondant à une dernière sous-étape de la transformation discrète inverse et apte à traiter les données d'origine (X0-X7) et les données filtrées intermédiaires.

2. Procédé de filtrage d'un ensemble de données d'origine (X0-X7) comprenant en séries les étapes de :

   - transformation discrète (DCT2) comportant une première sous-étape (ST1) apte à traiter les données d'origine et à délivrer des données transformées intermédiaires impaires, et un ensemble de sous-étapes (ST2 à ST4) apte à traiter les données transformées intermédiaires impaires et à délivrer des données transformées impaires,
   - correction (ZER) apte à traiter les données transformées impaires et à délivrer des données transformées corrigées impaires, et
   - transformation discrète inverse (IDCT2) comportant un ensemble de sous-étapes (ST5 à ST7) apte à traiter les données transformées corrigées impaires et à délivrer des données filtrées intermédiaires,

**caractérisé en ce que** l'étape de correction est apte à annuler les données transformées impaires autres que celles devant être mises à zéro et **en ce que** l'étape de transformation discrète comporte une dernière sous-étape (ST8) apte à traiter les données d'origine (X0-X7) et les données filtrées intermédiaires.

3. Décodeur vidéo apte à fournir des données numériques décodées et comprenant un circuit de filtrage selon la revendication 1, apte à traiter les données numériques décodées de manière à fournir des données numériques traitées.

4. Récepteur de télévision apte à recevoir des données numériques décodées et comprenant un circuit de filtrage selon la revendication 1, apte à traiter les données numériques décodées de manière à fournir des données numériques traitées destinées à être affichées sur un écran dudit récepteur.

5. Programme d'ordinateur comprenant un jeu d'instructions pour mettre en oeuvre le procédé de filtrage de données selon la revendication 2, lorsque ledit programme est exécuté par un processeur.

**Patentansprüche**

1. Filterschaltung einer ursprünglichen Dateneinheit (X0-X7) mit:

- Einer ersten Verarbeitungsstufe (ST1) entsprechend einem ersten Unterschritt einer diskreten Transformation (DCT2), für die Verarbeitung der ursprünglichen Daten und für die Ausgabe von ungeraden transformierten Zwischendaten fähig, und einer ersten Verarbeitungsstufeneinheit (ST2 bis ST4) entsprechend einer Unterschritteinheit zur diskreten Transformation, für die Verarbeitung der ungeraden transformierten Zwischendaten und die Ausgabe von ungeraden transformierten Daten fähig,
- einer Korrektureinheit (ZER), für die Annullierung anderer als derjenigen ungeraden transformierten Daten fähig, die auf Null rückgestellt werden müssen, und für die Ausgabe der ungeraden korrigierten transformierten Daten, und
- einer zweiten Verarbeitungsstufeneinheit (ST5 bis ST7) entsprechend einer Unterschritteinheit einer umgekehrten diskreten Transformation (IDCT2), zur Verarbeitung der ungeraden korrigierten transformierten Daten und für die Ausgabe von gefilterten Zwischendaten fähig, und einer letzten Verarbeitungsstufe (ST8) entsprechend einem letzten Unterschritt zur umgekehrten diskreten Transformation, zur Verarbeitung der ursprünglichen Daten (X0-X7) und der gefilterten Zwischendaten fähig.

2. Filterverfahren einer ursprünglichen Dateneinheit (X0-X7) mit in Serien den Schritten zur:

- Diskreten Transformation (DCT2) mit einem ersten Unterschritt (ST1), zur Verarbeitung der ursprünglichen Daten und für die Ausgabe der ungeraden transformierten Zwischendaten fähig, mit einer Unterschritteinheit (ST2 bis ST4), zur Verarbeitung der ungeraden transformierten Zwischendaten und für die Ausgabe der ungeraden transformierten Daten fähig,
- Korrektur (ZER), zur Verarbeitung der ungeraden transformierten Daten und für die Ausgabe von ungeraden korrigierten transformierten Daten fähig, und
- umgekehrten diskreten Transformation (IDCT2) mit einer Unterschritteinheit (ST5 bis ST7), zur Verarbeitung der ungeraden korrigierten transformierten Daten und für die Ausgabe der gefilterten Zwischendaten fähig,

**dadurch gekennzeichnet, dass** der Korrekturschritt zur Annullierung der ungeraden transformierten Daten fähig ist, die nicht auf Null rückgestellt werden müssen, und dadurch, dass der Schritt zur diskreten Transformation einen letzten Unterschritt (ST8) enthält, zur Verarbeitung der ursprünglichen Daten (X0-X7) und der gefilterten Zwischendaten fähig.

3. Videodecodierer, fähig zur Ausgabe von decodierten digitalen Daten, mit einer Filterschaltung nach Anspruch 1, fähig zur derartigen Verarbeitung der decodierten digitalen Daten, um die verarbeiteten digitalen Daten auszugeben.

4. Fernsehempfänger, fähig für den Erhalt der decodierten digitalen Daten, mit einer Filterschaltung nach Anspruch 1, fähig zur derartigen Verarbeitung der decodierten digitalen Daten, um verarbeitete digitale Daten auszugeben, die dafür bestimmt sind, auf einem Bildschirm des besagten Empfängers angezeigt zu werden.

5. Computerprogramm mit einem Anweisungssatz, um das Datenfilterverfahren nach Anspruch 2 umzusetzen, wenn das besagte Programm von einem Prozessor ausgeführt wird.

**Claims**

1. A circuit for filtering a set of original data (X0-X7) comprising:

   - a first processing stage (ST1) corresponding to a first sub-step of a discrete transformation (DCT2) and able to process the original data and to deliver odd intermediate transformed data, and a first set of processing stages (ST2 to ST4) corresponding to a set of sub-steps of the discrete transformation, able to process the odd intermediate transformed data and to deliver odd transformed data,
   - a correction unit (ZER) able to cancel out the odd transformed data other than those which are to be set to zero, and to deliver odd corrected transformed data, and
   - a second set of processing stages (ST5 to ST7) corresponding to a set of sub-steps of an inverse discrete transformation (IDCT2), able to process the odd corrected transformed data and to deliver intermediate filtered data, and a last processing stage (ST8) corresponding to a last sub-step of the inverse discrete transformation and able to process the original data (X0-X7) and the intermediate filtered data.

2. A method of filtering a set of original data (XO-X7), comprising in series the steps of:

   - discrete transformation (DCT2) comprising a first sub-step (ST1) able to process the original data and to deliver odd intermediate transformed data, and a set of sub-steps (ST2 to ST4) able to process the odd intermediate transformed data and to deliver odd transformed data,
   - correction (ZER) able to process the odd transformed data and deliver odd corrected transformed data, and
   - inverse discrete transformation (IDCT2) comprising a set of sub-steps (ST5 to ST7) able to process the odd corrected transformed data and to deliver intermediate filtered data, **characterized in that** the correction step is able to cancel out the odd transformed data other than those which are to be set to zero and **in that** the discrete transformation step comprises a last sub-step (ST8) able to process the original data (X)-X7) and the intermediate filtered data.

3. A video decoder able to deliver decoded digital data and comprising a filtering circuit as claimed in claim 1, able to process the decoded digital data in order to deliver processed digital data.

4. A television receiver able to receive decoded digital data and comprising a filtering circuit as claimed in claim 1, able to process decoded digital data in order to deliver processed digital data intended to be displayed on a screen of said receiver.

5. A computer program comprising a set of instructions for implementing the data filtering method as claimed in claim 2, when said program is executed by a processor.

FIG.1

FIG.2

FIG.3

EP 1 303 142 B1

FIG.4

FIG.5

DCT2

IDCT2

X  ST1  ST2  ST3  ST4  ST5  ST6  ST7  ST8  XF

YZ7

EP 1 303 142 B1

FIG.6